# EUROPEAN PATENT APPLICATION

(11) **EP 3 809 161 A1**
(43) Date of publication of application: **21.04.2021**
(21) Application number: 18922861.2
(22) Date of filing: 14.06.2018
(51) Int. Cl.: G01S 17/87

(54) **INFORMATION PROCESSING DEVICE, INFORMATION PROCESSING METHOD AND DISTANCE MEASUREMENT SYSTEM**

(71) Applicant: Sony Corporation, 108-0075 Tokyo (JP)
(72) Inventor: MATSUNAGA, Hideyuki, Tokyo 140-0002 (JP)
(74) Representative: D Young & Co LLP
(86) International application number: PCT/JP2018/022812
(87) International publication number: WO 2019/239566

(57) **Abstract**

[Problem] To provide an information processing apparatus that enables three-dimensional ranging of medium to long distances at high resolution and high speed.

[Solution] An information processing apparatus is provided that includes a recognition processing unit that recognizes a ranging target in space abased on a detection result of a space recognition sensor, and a ranging-parameter setting unit that sets a scanning region for a ranging sensor that performs three-dimensional ranging by scanning space with a laser, so as to include at least a part of the ranging target.

## Description

### Field

The present disclosure relates to an information processing apparatus, an information processing method, and a ranging system.

### Background

As for methods of performing three-dimensional ranging, various methods exist irrespective of passive method or active method, such as time-of-flight (ToF) camera, a stereo camera, a depth from defocus (DFD), and light detection and ranging (LiDAR). These methods have been receiving attention in recent years as a technique to recognize a wide range for driving automation of vehicles, surveillance accuracy enhancement in the security field, and the like.

The three-dimensional ranging is expected to be able to measure a distance of over 100 m outdoor, while it is sufficient if a distance of about 10 m can be measured indoor. Because the LiDAR that scans space with lasers to perform three-dimensional ranging is also capable of medium-to-long distance ranging, and is able to perform raging stably irrespective of whether indoor or outdoor, the demand for it is expanding.

For example, in Patent Literature 1, a LiDAR system that is used to determine spatial statistics of dispersed substances that fragment in a permeable medium and spatially fluctuate is disclosed. The LiDAR system is applied to, for example, investigation of forests, an influence of occlusion by concentration of leaves can be grasped from changes by controlling a size, a shape, a range, or a scanning angle of beams of the LiDAR. Moreover, in Patent Literature 2, use of scan patterns that irregularly vary according to a surface condition to improve accuracy in a differential absorption LiDAR (DIAL) system is disclosed.

### Citation List

### Patent Literature

Patent Literature 1: JP-T-2004-532391
Patent Literature 2: JP-T-2009-508108

### Summary

### Technical Problem

However, it cannot say that a method capable of performing three-dimensional ranging for medium-to-long distance at high resolution and high speed has been established. The LiDAR enables medium-to-long distance ranging, but because it adopts a method of scanning space with a mechanically movable portion, such as a rotation mechanism and a mirror, the flexibility in its movement is not very high.

Thus, the present disclosure proposes a new and improved information processing apparatus, information processing method, and ranging system that enable three-dimensional ranging for medium-to-long distance at high resolution and high speed.

### Solution to Problem

According to the present disclosure, an information processing apparatus is provided. The information processing apparatus includes a recognition processing unit that recognizes a ranging target in space based on a detection result of a space recognition sensor; and a ranging-parameter setting unit that sets a scanning region for a ranging sensor that performs three-dimensional ranging by scanning space with a laser, so as to include at least a part of the ranging target.

Moreover, according to the present disclosure, an information processing method is provided. The information processing method includes recognizing a ranging target in space based on a detection result of a space recognition sensor; and setting a scanning region for a ranging sensor that performs three-dimensional ranging by scanning space with a laser, so as to include at least a part of the ranging target.

Moreover, according to the present disclosure, a ranging system is provided. The ranging system includes a ranging sensor that three-dimensionally ranges space by using a laser; and an information processing apparatus that recognizes a ranging target in the space based on a detection result by a space recognition sensor, and that sets a region including at least the ranging target as a scanning region to be scanned by the ranging sensor.

### Advantageous Effects of Invention

As explained above, according to the present disclosure, three-dimensional ranging for medium-to-long distances at high resolution and at high speed is enabled. It is noted that the above effect is not limited, and any effect described in the present specification, or other effects that can be understood from the present specification may be produced together with the above effect, or in place of the above effect.

### Brief Description of Drawings

FIG. 1 is a block diagram illustrating a configuration of a ranging system according to one embodiment of the present disclosure.
FIG. 2 is a configuration diagram illustrating a configuration of a LiDAR in FIG. 1.
FIG. 3 is an explanatory diagram for explaining overview of ranging by the ranging system according to the embodiment.
FIG. 4 is a flowchart illustrating one example of a three-dimensional ranging method by the ranging system according to the embodiment.
FIG. 5 is an explanatory diagram illustrating a scanning region and a method of scanning when plural ranging targets are present at different positions in a depth direction.
FIG. 6 is an explanatory diagram for explaining settings of a scanning region when a ranging target is a moving object.
FIG. 7 is an explanatory diagram of a case in which a resolution is changed according to a ranging target.
FIG. 8 is an explanatory diagram of a case in which a specific object is excluded from a scanning region.
FIG. 9 is an explanatory diagram of a case in which a scanning region is set according to an amount of movement information.
FIG. 10 is an explanatory diagram of a case in which a scanning speed is changed according to a traveling speed of a moving object on which a ranging sensor is mounted.
FIG. 11 is an explanatory diagram illustrating one example of a scanning region by a ranging sensor that is mounted on a vehicle stopped at an intersection.
FIG. 12 is a flowchart illustrating processing of a ranging system when scan setting is performed according to a context.
FIG. 13 is a block diagram illustrating a hardware configuration example of an information processing apparatus according to the embodiment.

### Description of Embodiments

Hereinafter, exemplary embodiments of the present disclosure will be explained in detail with reference to the accompanying drawings. In the present specification and drawings, identical reference signs are assigned to components having substantially the same functional configurations, and duplicated explanation will be thereby omitted.

Explanation will be given in following order.
1. Ranging System
2. Three-Dimensional Ranging Method
   2.1. Overview
   2.2. Processing
   2.3. Supplement
      (1) Change of Resolution According to Ranging Target
      (2) Exclusion from Scanning region
      (3) Setting of Scanning region According to Amount of Movement Information
      (4) Setting of Scanning Speed According to Self-Condition
      (5) Scan Setting According to Context
3. Conclusion
4. Hardware Configuration

### [1. Ranging System]

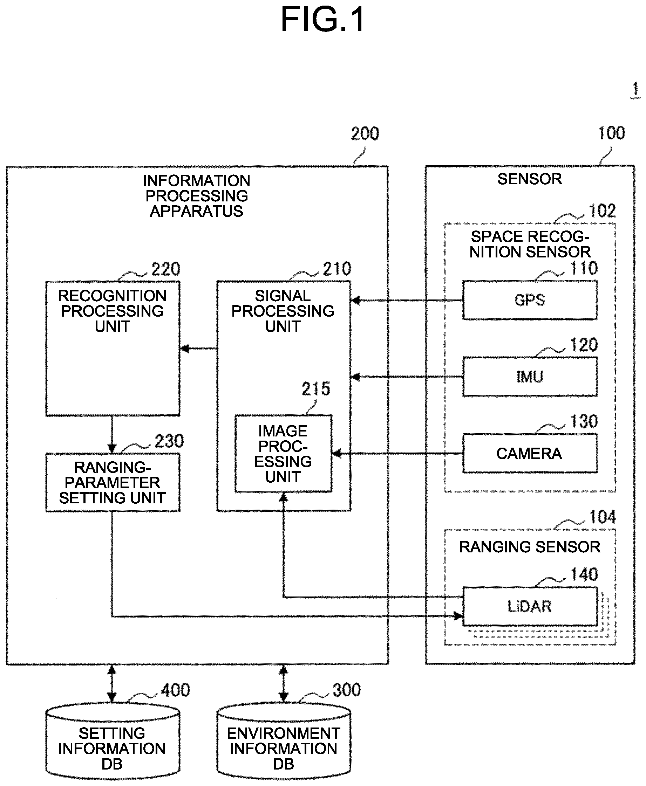

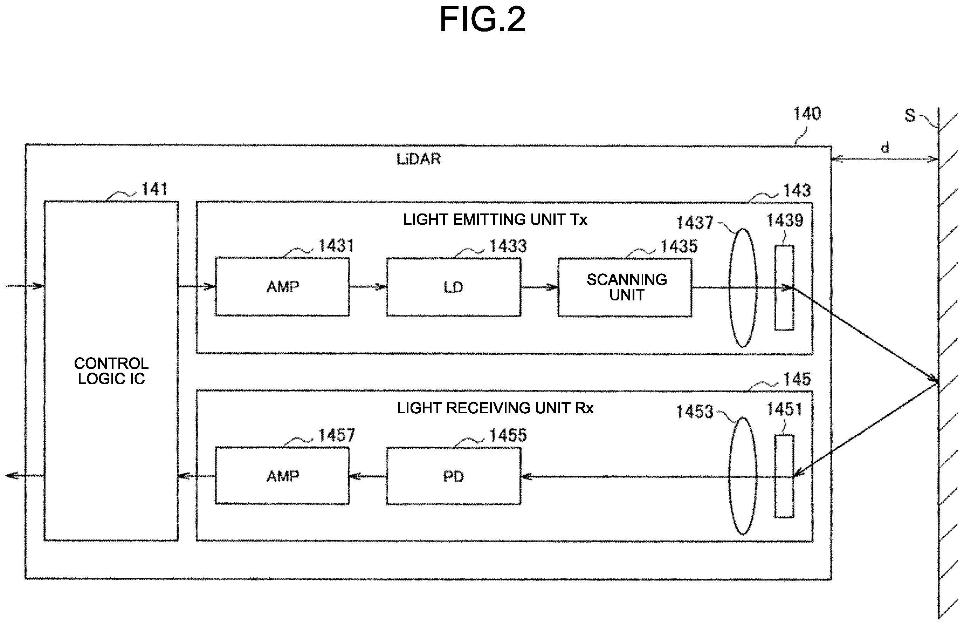

First, a ranging system 1 according to one embodiment of the present disclosure will be explained based on FIG. 1 and FIG. 2. FIG. 1 is a block diagram illustrating a configuration of the ranging system 1 according to the present embodiment. FIG. 2 is a configuration diagram illustrating a configuration of a LiDAR 140. The ranging system 1 according to the present embodiment includes, as illustrated in FIG. 1, a sensor 100, an information processing apparatus 200, an environment information DB 300, and a setting information DB 400.

### Sensor

The sensor 100 acquires information about space subject to ranging. The sensor 100 of the ranging system 1 includes, as illustrated in FIG. 1, a space recognition sensor 102 and a ranging sensor 104.

The space recognition sensor 102 acquires information to recognize an object present in space to be ranged. As the space recognition sensor 102, for example, a global positioning system (GPS) receiver 110, an inertial measurement unit (IMU) 120, a camera 130, and the like can be used. The GPS receiver 110 measures a latitude, a longitude, and an altitude of a device in which the GPS receiver 110 is provided by receiving a GPS signal. The IMU 120 is constituted of a three-axis gyroscope and a three-direction acceleration sensor, and measures an angular speed and an acceleration of a device in which the IMU 120 is provided. The IMU 120 may further include functions of a magnetic sensor, a pressure sensor, and the like. The camera 130 images space to be ranged, and acquires a captured image. The information acquired by the space recognition sensor 102 is output to the information processing apparatus 200.

The space recognition sensor 102 may be provided in a device installed in space for the ranging system 1, or may be one arranged in a device that is brought into space to be ranged as a smartphone, and the like.

The ranging sensor 104 is used to range space. The ranging system 1 according to the present embodiment uses a sensor that scans space by using lasers, to be capable of three-dimensional ranging, and can use a LiDAR 140, for example. There are some ranging methods by using the ranging sensor 104. For example, a method in which a distance d to a ranging target is measured based on time until an emitted laser returns after reflected on the ranging target, and a method in which the distance d to a ranging target is measured based on a phase of returning light are included.

The LiDAR 140 includes a control logic integrated circuits (IC) 141, a light emitting unit 143, and a light receiving unit 145, for example, as illustrated in FIG. 2. The control logic IC 141 is an integrated circuit that controls information to scan by the LiDAR 140. For example, the control logic IC 141 outputs a signal to control the light emitting unit 143 to scan a ranging region based on an instruction from the information processing apparatus 200. Moreover, the control logic IC 141 processes a signal received from the light receiving unit 145, and outputs the distance d to a ranging target to the information processing apparatus 200 as a measurement result.

The light emitting unit 143 includes an amplifier (AMP) 1431, a laser diode (LD) 1433, a scanning unit 1435, a lens 1437, and a filter 1439. A signal output from the control logic IC 141 is amplified by the amplifier 1431, and causes the laser diode 1433 to output a laser. The laser output from the laser diode 1433 is guided by the scanning unit 1435, and then output to space through the lens 1437 and the filter 1439. The scanning unit 1435 is a mechanism that adjusts an output direction of a laser. The scanning unit 1435 may be constituted of a mirror that reflects an incident laser to space in an output direction, a motor that changes an angle of the mirror, and a driving unit, such as a micro electro mechanical systems (MEMS). Alternatively, an optical phased array that controls an emission direction of a beam by using a phenomenon of strengthening or eliminating each other depending on a direction in which phase-shifted waves interfere with each other may be used as the scanning unit 1435.

The light receiving unit 145 includes a filter 1451, a lens 1453, a photodiode (PD) 1455, and an amplifier (AMP) 1457. The light receiving unit 145 receives a laser that has been emitted from the light emitting unit 143 and reflected on a surface S of an object in space. The reflected laser passes through the filter 1451, and then gathered by the lens 1453, to be received by the photodiode 1455. The laser is converted into an electrical signal by the photodiode 1455 and amplified by the amplifier (AMP) 1457, and is then output to the control logic IC 141.

The LiDAR 140 illustrated in FIG. 2 has a structure of an off-axial optical system, and the light emitting unit 143 that outputs a laser and the light receiving unit 145 that receives a reflected laser are configured as different optical systems. However, a configuration of the LiDAR 140 of the present disclosure is not limited to the example, and may be of a coaxial optical system type in which an optical system that outputs a laser and an optical system that receives a reflected laser are the same optical system.

The ranging sensor 104 may be stationary installed in space subject to ranging, or may be installed in a mobile object, such as a vehicle, an aircraft, a helicopter, and a drone. Moreover, plural units of the ranging sensor 104 may be arranged according to the number of ranging targets, and the like. By arranging the ranging sensor 104 in plurality, it becomes possible to scan a scanning region more densely, and information can be acquired at high resolution.

### Information Processing Apparatus

The information processing apparatus 200 includes a signal processing unit 210, a recognition processing unit 220, and a ranging-parameter setting unit 230.

The signal processing unit 210 processes a detection signal that is input from the sensor 100, and generates information to recognize space and an object in the space. The signal processing unit 210 includes an image processing unit 215, and information acquired by the camera 130 and the LiDAR 140 is processed by the image processing unit 215. The signal processing unit 210 may associate space information that is acquired from a signal acquired from the space recognition sensor 102, and space information (for example, position information, and the like) that is acquired from a signal acquired from the ranging sensor 104. The information processed by the signal processing unit 210 is output to the recognition processing unit 220.

The recognition processing unit 220 performs processing of recognizing space and an object in the space based on the information processed by the signal processing unit 210. Basically, the space and the object in the space can be recognized by using information based on a measurement result of the space recognition sensor 102.

For object recognition processing of the recognition processing unit 220, an existing image recognition method may be used. By the recognition processing unit 220, for example, a static object and a dynamic object present in space subject to ranging can be recognized. The static object is an object, such as a ground surface, a plant, a building, and a bridge, if it is outdoor, and is an object, such as a floor, a wall, a desk, and a chair, if it is indoor. The dynamic object is, for example, a mobile object, such as a human, an animal, and a vehicle. Because the static object is an object that hardly changes, there is little need to be scanned each time. On the other hand, because the dynamic object changes its condition every moment, it can be regarded as a ranging target to be scanned at higher frequency than the static object. The information recognized by the recognition processing unit 220 is output to the ranging-parameter setting unit 230.

The ranging-parameter setting unit 230 sets ranging parameters at the time of scanning space by the ranging sensor 104 based on the space recognition result of the recognition processing unit 220. For example, the ranging-parameter setting unit 230 sets a scanning region of the ranging sensor 104 as a ranging parameter. In the ranging system 1 according to the present embodiment, by setting only a particular target as a scanning region to be scanned normally by the ranging sensor 104, high speed and high resolution three-dimensional ranging can be achieved. The ranging-parameter setting unit 230 sets a scanning region such that at least a part of a ranging target (for example, a dynamic object) identified by the space recognition result is included. The ranging sensor 104 operates to scan the scanning region set by the ranging-parameter setting unit 230.

Moreover, the ranging-parameter setting unit 230 may set ranging parameters, such as a sampling frequency, the number of scanning points, and a maximum distance, as the ranging parameter. For example, the ranging-parameter setting unit 230 may change a resolution or a scanning speed according to a position in a depth direction of a ranging target in space. Furthermore, the ranging-parameter setting unit 230 may change scan setting information including parameters relating to scanning of a scanning region according to a context of use of a ranging result of the ranging sensor.

### Database

The environment information DB 300 stores environment information relating to space, such as a map. The environment information stored in the environment information DB is used in combination with a measurement result by the sensor 100 as necessary. Thus, spatial condition can be grasped more specifically.

The setting information DB 400 stores various kinds of setting information to be used for information processing by the information processing apparatus 200. As the setting information, for example, information about an object to be a ranging target, a relation between a depth of a ranging target and a resolution or a scanning speed, scan setting information of a scanning region, and the like are included.

As above, the configuration of the ranging system 1 according to the present embodiment has been explained.

### [2. Three-Dimensional Ranging Method]

### [2.1. Overview]

It is not often the case that the three-dimensional ranging is used for the purpose of performing the three-dimensional ranging itself, but it is often used to detect an object, and to use a result from measurement of a distance to the object, a size of the object, and the like for performing some kind of process determination. Considering the purpose of the three-dimensional ranging as described above, it is effective to range only an object to be a ranging target region, and the like. Particularly, for the LiDAR 140 that performs point group processing, there is heavy data processing, and it is difficult to achieve high speed and high resolution processing if entire space is scanned. However, by limiting a scanning region, even when the LiDAR 140 is used, high speed and high resolution three-dimensional ranging is possible.

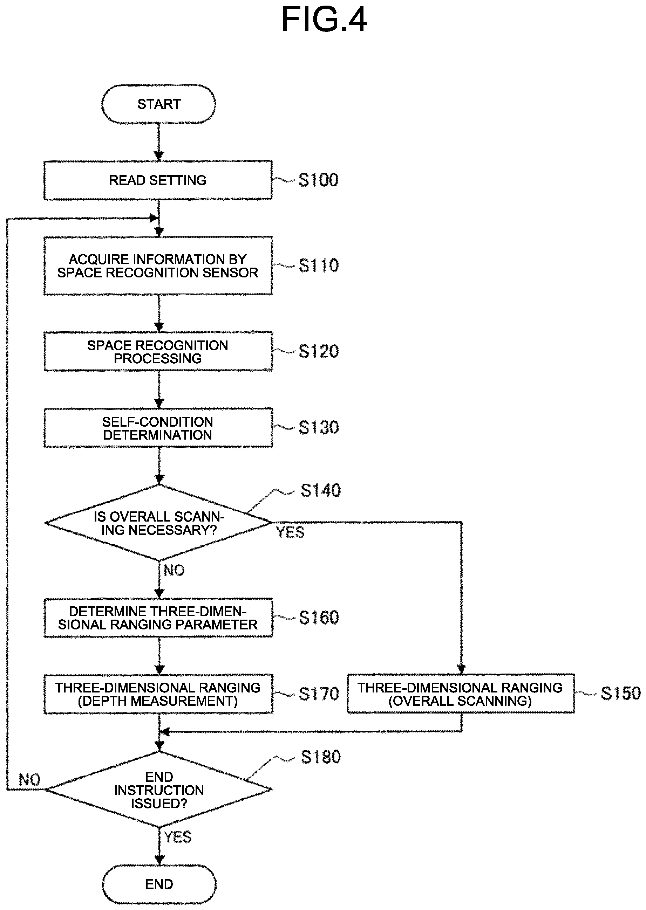

For example, as illustrated in FIG. 4, suppose that an action of a person that plays in a golf course or a path of a ball is desired to be measured and analyzed. In this case, the golf course does not dynamically change. What moves is mainly a player P1 that plays golf and a ball P2. Therefore, in the ranging system according to the present embodiment, the player P1 and the ball P2 are regarded as a ranging target, and scanning regions A1, A2 are set to include these targets. As for one with no dynamic changes, measurement is performed only the first time, or existing data is used, thereby specifying a region to be ranged by the ranging sensor 104 normally to the scanning regions A1, A2. Thus, the scanning region to be scanned by the ranging sensor 104 becomes small, and the three-dimensional ranging can be performed effectively.

### [2.2. Processing]

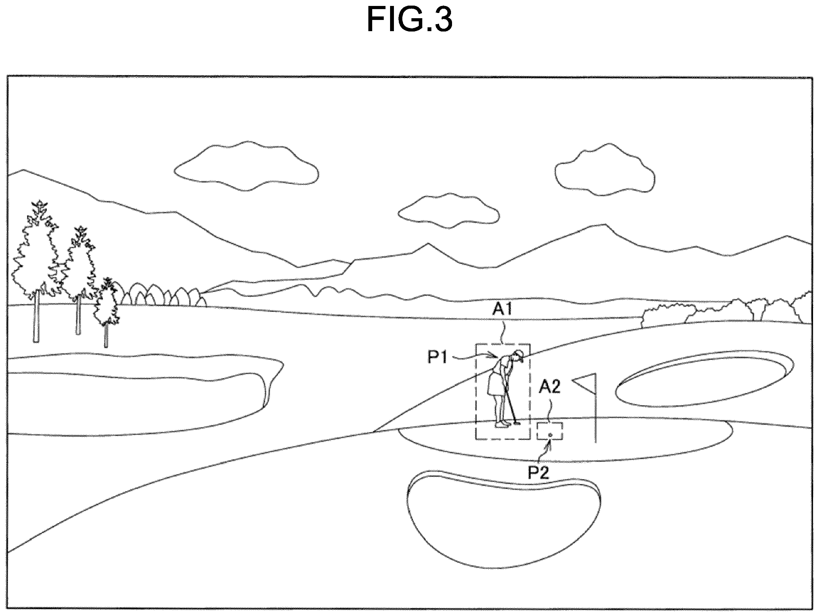

In the following, a three-dimensional ranging method by the ranging system 1 according to the present embodiment will be explained based on FIG. 4. FIG. 4 is a flowchart illustrating one example of the three-dimensional ranging method by the ranging system 1 according to the embodiment. In the following, a case in which the ranging system 1 is used for ranging in a play at a golf course as illustrated in FIG. 3 will be explained.

### Initial Setting

In the three-dimensional ranging by the ranging system 1 according to the present embodiment, as illustrated in FIG. 4, first, initial setting, such as setting of a ranging target to be ranged is performed (S100). For example, such a setting that the player P1 and the ball P2 are ranging target is made.

### Information Acquisition by Space Recognition Sensor

Subsequently, information acquisition by the space recognition sensor 102 is performed (S110). The space recognition sensor 102 may be, for example, a camera arranged on a course in a fixed manner, or a GPS receiver, an IMU, and the like arranged on a device or equipment or the like a device that is worn or used by the player P1. The information acquired by the space recognition sensor 102 is output to the information processing apparatus 200. The information processing apparatus 200 processes the information acquired by the space recognition sensor 102 by the signal processing unit 210, to output to the recognition processing unit 220.

The recognition processing unit 220 performs space recognition from the information acquired by the space recognition sensor 102 (S120). In space recognition processing, an object, such as a person and a building, present in the space subject to ranging is recognized. The information can be used, for example, to identify a ranging target from the space. In the example of FIG. 3, the player P1 and the ball P2 in the space are recognized from the information acquired by the space recognition sensor 102. When course information is stored in the environment information DB 300, by associating with a flag, a green, a bunker, and the like identified by the space recognition processing, association with a position of an object present in the space and the like is also enabled.

### Self-Condition Determination

Moreover, the recognition processing unit 220 determines whether a position of the ranging sensor 104 is changing (S130). It is because scanning of entire space is needed again when the position of the ranging sensor 104 is changing. Movement of the ranging sensor 104 may be determined from a measurement result of the GPS receiver or the IMU arranged on the object on which the ranging sensor 104 is arranged, or may be determined based on a result of the space recognition processing by the recognition processing unit 220 at step S120.

### Scan Processing

Thereafter, the ranging-parameter setting unit 230 determines whether the entire space is set as a scanning region based on a result of self-condition determination processing at step S130 (S140). When it is determined that the position of the ranging sensor 104 is changing at step S130, for example, the ranging-parameter setting unit 230 sets the entire space as the scanning region. When the entire space is set as a scanning region, the ranging-parameter setting unit 230 instructs the ranging sensor 104 to scan the entire space. The ranging sensor 104 performs three-dimensional ranging with respect to the entire space based on the instruction (S150).

On the other hand, for example, when it is determined that the position of the ranging sensor 104 is not changing at step S130, the ranging-parameter setting unit 230 sets only a part of the space as a scanning region. In this case, first, the ranging-parameter setting unit 230 decides scan setting information including a parameter of the time when the three-dimensional ranging is performed by the ranging sensor 104 (S160). Specifically, the ranging-parameter setting unit 230 sets a ranging parameter, such as a scanning region, a sampling frequency, the number of scanning points, and a maximum distance. For example, in the example illustrated in FIG. 3, the scanning region A1 is set to include the player P1, and a scanning region S2 is set to include the ball P2. Furthermore, to each of the scanning regions A1, A2, a sampling frequency, the number of scanning points, a maximum distance, and the like are set.

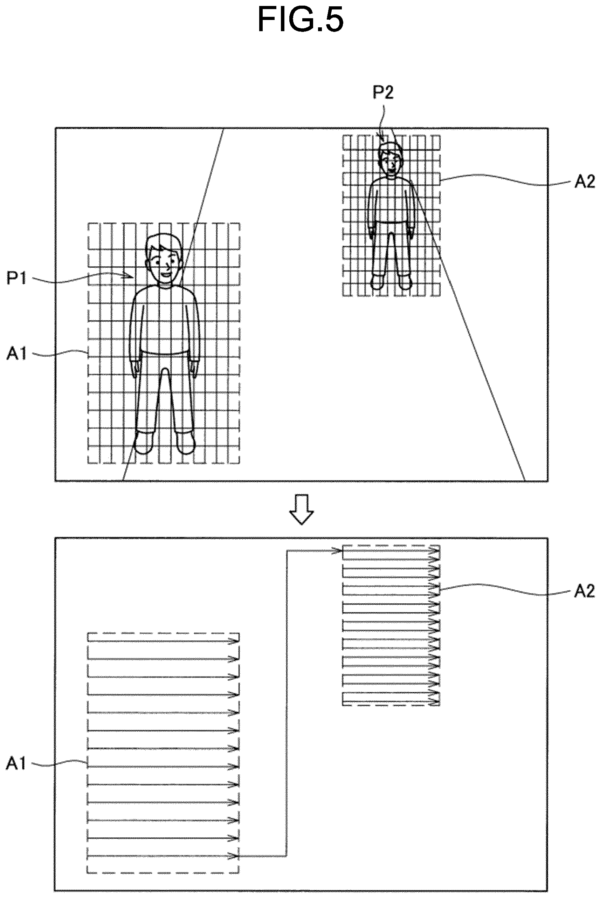

The sampling frequency and the number of scanning points of the scanning region may be set based on a position in a depth direction of the ranging target. For example, as illustrated in an upper part of FIG. 5, it is assumed that the ranging targets P1 and P2 are present at different positions in the depth direction. To recognize the two ranging targets P1 and P2 at the same time, it is necessary to scan the far ranging target P2 at higher resolution than the close ranging target P1. Therefore, by increasing the sampling frequency, or increasing the number of scanning points as the ranging target becomes farther, the ranging target can be ranged at a high resolution.

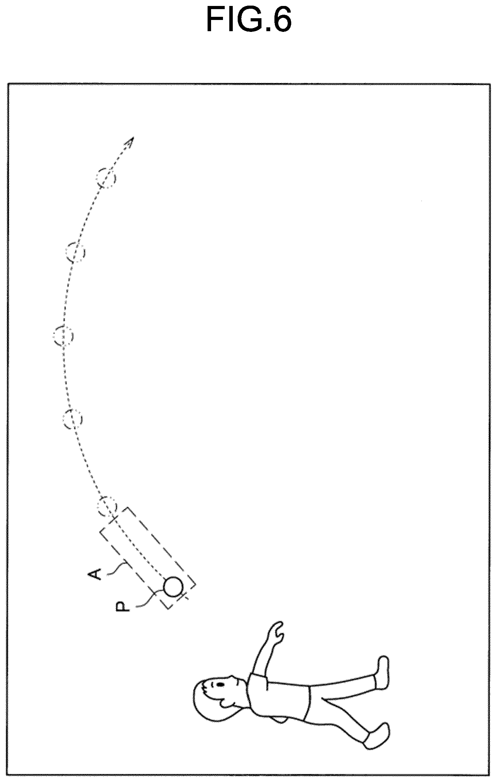

Moreover, in the case of an object that can move as the ball P2, it can be configured to estimate a moving direction of the object, and to reflect it to next scanning. Thus, the ranging target can be scanned certainly. For example, as illustrated in FIG. 6, when a ball P is a ranging target and the thrown ball P is to be ranged, a scanning region A may be set according to characteristics of movement of the ranging target, such as a moving direction or a moving speed. Specifically, when a movement locus of the thrown ball P is estimated to be parabolic, an estimated range of movement of the ball P within one sampling period may be included in the scanning region A. As described, by estimating a moving direction of an object, a ranging target can be ranged certainly.

When the three-dimensional ranging parameter is set at step S160, the ranging-parameter setting unit 230 instructs the ranging sensor 104 to scan the set scanning region. The ranging sensor 104 performs three-dimensional ranging of only the set scanning region based on the instruction (step S170). When plural ranging regions are set, to scan with a single unit of the ranging sensor 104, for example, the scanning region A1 and the scanning region A2 may be scanned sequentially as illustrated in a lower part of FIG. 5. When plural units of the ranging sensor 104 are provided, one or more ranging regions may be scanned by these ranging sensors 104.

Scanning of the scanning region may be performed each time, or at predetermined frequency. Moreover, when plural scanning regions are set, scanning frequency may be set for each of the scanning regions. On the other hand, a region other than the scanning region (second scanning region) does not need to be scanned each time, and it may be scanned at lower frequency than operation frequency of the scanning region.

The ranging system 1 may repeat processing from step S110 until a ranging end instruction is issued, for example, from a user or the like. When a ranging end instruction is received, the ranging system 1 ends the three-dimensional ranging (S180). As above, the three-dimensional ranging method by the ranging system 1 according to the present embodiment has been explained.

### [2.3. Supplement]

In the ranging system 1 according to the present embodiment, only a part of space is set as a ranging region, and is scanned by the ranging sensor 104. Therefore, it is also possible to dynamically change a scanning method for each scanning region.

### (1) Change of Resolution According to Ranging Target

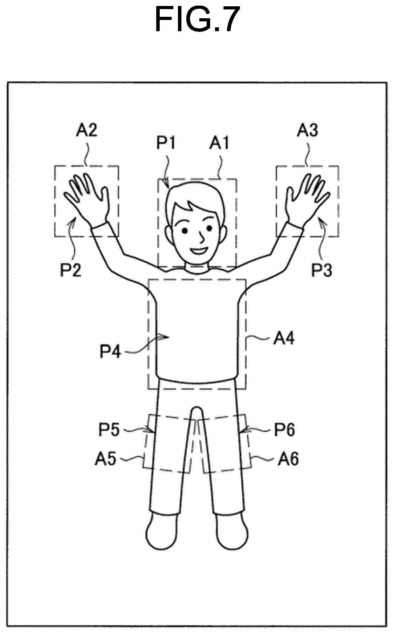

For example, a resolution may be dynamically changed according to a ranging target. For example, a scanning region may be set for each part, such as a face, a hand, and a trunk, in one ranging target of person, and may change scan setting for each. Specifically, for example, as illustrated in FIG. 7, when a person is to be ranged, a face P1, hand P2, P3, and the like, structures of which are complicated are imaged at a high resolution. On the other hand, because structures of a trunk P4, thighs P5, P6, and the like are not very complicated, imaging may be performed at a relatively low resolution. Therefore, scanning regions A1, A2, A3 including the face P1, and the hands P2, P3 may be scanned more densely by increasing the scanning points than the scanning regions A4, A5, A6 including the trunk P4, and the thighs P5, P6, and may be imaged at a high resolution.

Alternatively, a scanning region may be set according to an object of a ranging target, and a scan setting may be changed for each. For example, because an object having a simple structure as a ball has no problem even if a resolution is low, the number of scanning points may be decreased. On the other hand, because an object as a person or a vehicle has a structure more complicated than a ball, the number of scanning points may be increased and imaging may be performed at a high resolution.

As described, a necessary resolution may be determined according to the complexity (that is, an amount of information) of structure of a ranging target, to set the number of scanning points. The resolution to be set for an object may be set by referring to, for example, a correspondence between an object and a resolution set in the setting information DB 400 in advance. Alternatively, the complexity of structure of an object may be determined from a recognition result of the object recognized by the space recognition processing, to set a resolution.

### (2) Exclusion from Scanning Region

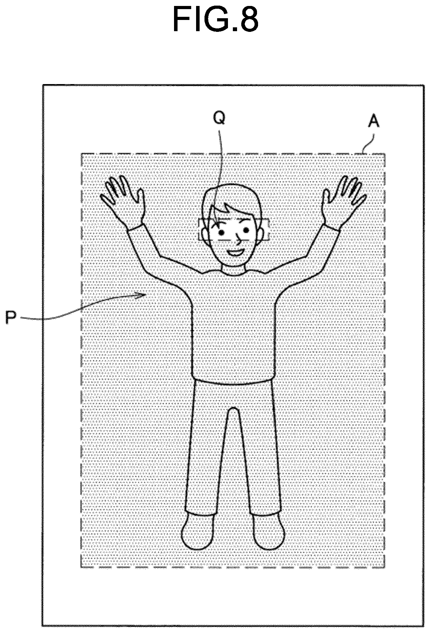

In the ranging system 1 according to the present embodiment, only a part of space can be set as a scanning region and, therefore, a specific object can be excluded from the scanning region, and set not to be scanned also. For example, as illustrated in FIG. 8, when a person P is to be ranged, the scanning region A is set to include the relevant person P. However, when ranging is performed by using a laser, there is a part desired to avoid irradiation of a laser as an eye Q. Accordingly, when a scanning region is set by the ranging-parameter setting unit 230, it may be configured to set the scanning region A such that a region including an object desired to avoid irradiation of a laser is regarded as an avoidance region, and the avoidance region is excluded from the scanning region. An object desired to avoid irradiation of a laser may be set, for example, in the setting information DB 400 in advance.

### (3) Setting of Scanning Region According to Amount of Movement Information

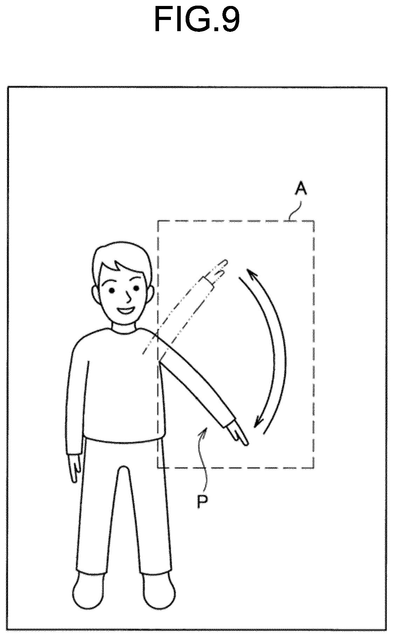

When the ranging system 1 according to the present embodiment is used for user interaction, such as gesture, and the like, movement of a part that is used to provide information is ranged. A hand, an arm, a leg, a head, and the like with which a gesture is made has a large amount of information compared to other parts. For example, as illustrated in FIG. 9, when information is provided by moving an arm P, an amount of movement information of the arm P is larger than an amount of movement information of other parts of the person. By configuring to acquire information of a movable region of the arm P at a higher resolution than the other regions, what is expressed by a gesture can be recognized further precisely, and accurate interaction can be achieved.

Thus, a scanning region of the ranging sensor 104 may be set according to an amount of the movement information. For example, a scanning region including a part performing a gesture is set to have a high resolution, and parts other than that is set to have a low resolution, or set not to be scanned. Thus, it is possible to measure a part necessary as information further precisely and speedily, and effective three-dimensional ranging is enabled.

Other than gestures, for example, there is a case in which information is acquired from movement of mouth of a person. In this case, for example, a scanning region may be set to include the mouth of the person, to be scanned at a high resolution.

### (4) Setting of Scanning Speed Depending on Self-Condition

There is a case in which the ranging sensor 104 is installed in space in a stationary manner, but there also is a case of being mounted on a mobile object, such as a vehicle, a drone, and a robot, and to scan space while moving. In this case, a scanning speed of the ranging sensor 104 may be changed depending on a traveling speed of the mobile object on which the ranging sensor 104 is mounted.

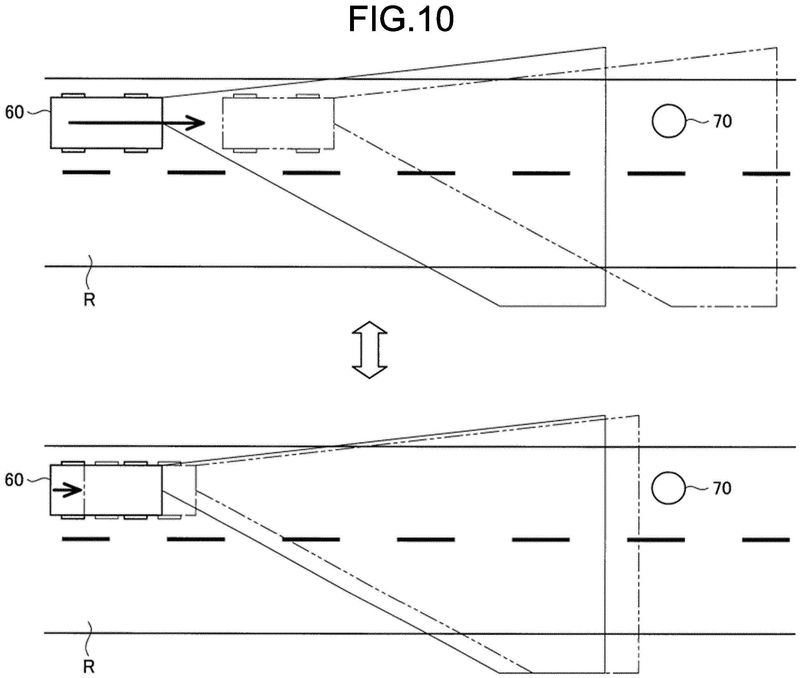

For example, as illustrated in FIG. 10, a case in which the ranging sensor 104 is mounted on a vehicle 60, and scans space while traveling is considered. At this time, because a distance moved per unit hour by the vehicle 60 differs depending on the speed of the vehicle 60, if a scanning speed of the ranging sensor 104 is fixed irrespective of the speed of the vehicle 60, scanning cannot be performed keeping up therewith. For example, to recognize an object 70 on a road R, it is necessary for the vehicle 60 that travels at a speed illustrated in an upper part of FIG. 10 to perform three-dimensional ranging at a higher scanning speed than the vehicle 60 that travels at a low speed illustrated in a lower part of FIG. 10. Accordingly, the ranging-parameter setting unit 230 may dynamically vary the scanning speed of the ranging sensor 104 depending on a traveling speed of a mobile object on which the ranging sensor 104 is mounted.

### (5) Scan Setting According to Context

In the ranging system 1 according to the present embodiment, the scan setting information for the ranging sensor 104 may be changed according to a situation in which a result of the three-dimensional ranging is used, that is, a context.

For example, when the three-dimensional ranging is performed by the ranging sensor 104 mounted on the vehicle 60, in a case in which the vehicle 60 is traveling at a high speed as illustrated in the upper part of FIG. 10, such as when traveling along an express way, it is necessary to grasp a state of a distant place quickly. At this time, the scan setting information for the ranging sensor 104 is set, giving priority to increasing a scanning speed, and to ranging a distant place.

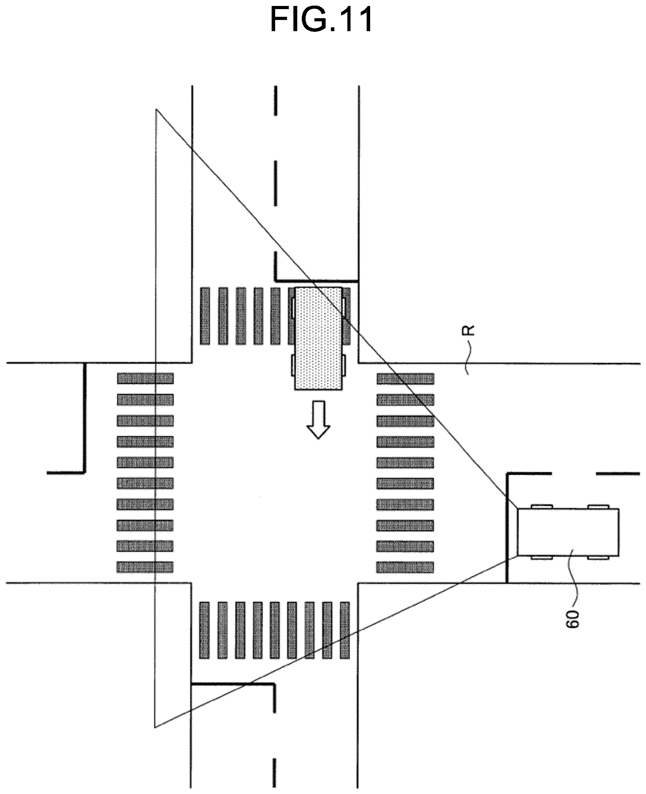

On the other hand, as illustrated in FIG. 11, when the vehicle 60 is stopped at an intersection or the like, it is necessary to acquire a state more precisely in a wide angle. For example, as illustrated in FIG. 11, an entire intersection is included in a scanning region, and it is configured such that the three-dimensional ranging is performed to be able to grasp a state change at the intersection (movement of other vehicles, movement of people on a crosswalk, and the like). At this time, the scan setting information for the ranging sensor 104 is set, giving priority to widening an angle of view, and to increasing a resolution.

As described, by setting the scan setting information for the ranging sensor 104 dynamically according to a situation in which a result of the three-dimensional ranging is used, appropriate information can be acquired.

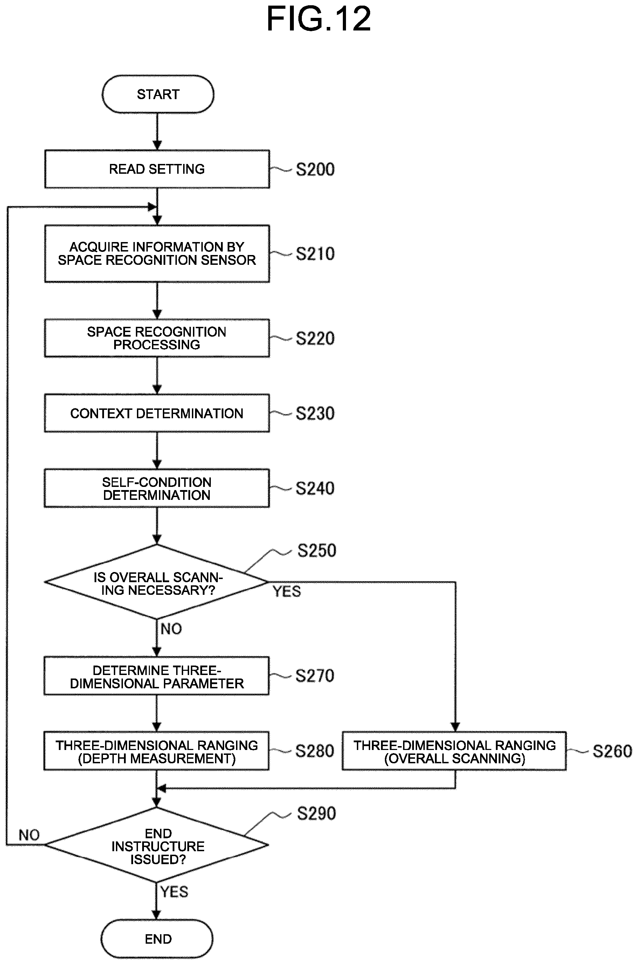

FIG. 12 illustrates processing performed by the ranging system 1 when the scan setting according to a context is performed. The processing is basically the same as the processing in FIG. 4, and processing to determine a context (S230) is additionally performed. That is, the initial setting (S200), the information acquisition by the space recognition sensor 102 (S210), and the space recognition processing (S220) are performed similarly to steps S100 to S120 in FIG. 4.

Thereafter, for example, determination of a context can be performed by the recognition processing unit 220 by using information of an object recognized by the space recognition processing from a measurement result of the space recognition sensor 102 and the like (S230). For example, in determination of a context relating to a traveling state of the vehicle described above, by recognizing a road, a vehicle, a pedestrian, a traffic light, a traffic sign, and the like by the image recognition processing at step S220, an express way and a general road can be distinguished. Furthermore, by a GPS receiver mounted on the vehicle, and the like, a traveling condition and a position of the vehicle can be recognized also.

When a context is determined by the recognition processing unit 220, the scan setting information according to the context is set by the ranging-parameter setting unit 230, for example, referring to the setting information DB 400. Thereafter, the self-determination processing (S240), the scan processing (S250 to S290) are performed. These processing are performed similarly to steps S130 to S180 in FIG. 4.

### [3. Conclusion]

As above, the ranging system 1 according to the present embodiment and the processing performed thereby have been explained. According to the present disclosure, a ranging target in space is recognized based on a detection result of the space recognition sensor 102, and a scanning region of the ranging sensor 104 that scans the space with a laser to perform three-dimensional ranging is set to include at least a part of the ranging target. By using the ranging sensor 104 that is capable of medium-to-long distance ranging, such as the LiDAR 140, stable three-dimensional ranging is enabled irrespective of outdoor or indoor. Moreover, by scanning a scanning region that is set to include a ranging target in space, high speed and high resolution three-dimensional ranging is possible compared to when scanning entire space each time. Particularly, a processing load of the three-dimensional point group processing such as that of the LiDAR 140 is significantly heavy, but by ranging only a particular region necessary, not scanning the entire space each time, the processing can be performed effectively.

### [4. Hardware Configuration]

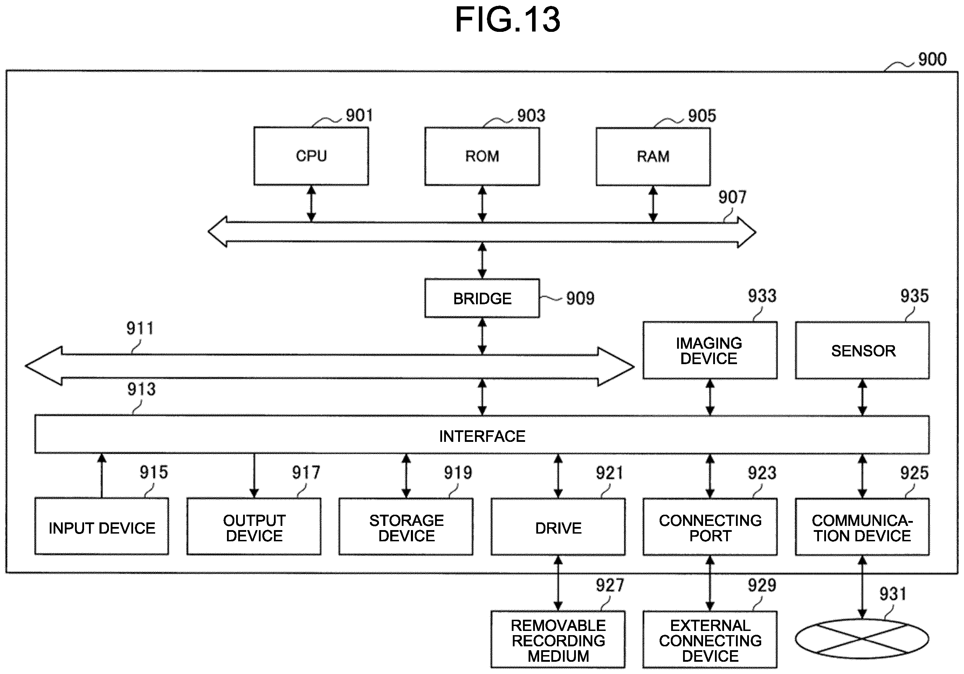

Next, a hardware configuration of the information processing apparatus according to an embodiment of the present disclosure will be explained, referring to FIG. 13. FIG. 13 is a block diagram illustrating a hardware configuration example of the information processing apparatus according to an embodiment of the present disclosure. A information processing apparatus 900 illustrated in FIG. 13 can implement, for example, the information processing apparatus 200 according to the embodiment described above.

The information processing apparatus 900 includes a central processing unit (CPU) 901, a read only memory (ROM) 903, and a random access memory (RAM) 905. Furthermore, the information processing apparatus 900 includes a host bus 907, a bridge 909, an external bus 911, an interface 913, an input device 915, an output device 917, a storage device 919, a drive 921, a connecting port 923, and a communication device 925. Furthermore, the information processing apparatus 900 may include an imaging device 933, and a sensor 935 as necessary. The information processing apparatus 900 may have a processing circuit, such as a digital signal processor (DSP), an application specific integrated circuit (ASIC), or a field-programmable gate array (FPGA), in place of or together with the CPU 901.

The CPU 901 functions as an arithmetic processing device and a control device, and controls entire operation or a part thereof in the information processing apparatus 900 in accordance with various kinds of programs recorded in the ROM 903, the RAM 905, the storage device 919, or a removable recording medium 927. The ROM 903 stores a program and arithmetic parameters used by the CPU 901, and the like. The RAM 905 temporarily stores a program that is used at execution by the CPU 901, a parameter that varies appropriately at its execution, and the like. The CPU 901, the ROM 903, and the RAM 905 are connected to each other by the host bus 907 constituted of an internal bus, such as a CPU bus. Furthermore, the host bus 907 is connected to the external bus 911, such as a peripheral component interconnect/interface (PCI) bus through the bridge 909.

The input device 915 is a device operated by a user, such as a mouse, a keyboard, a touch panel, a button, a switch, and a lever. The input device 915 may be a remote control device that uses an infrared ray or other radio waves, or may be an external connecting device 929, such as a mobile phone supporting an operation of the information processing apparatus 900. The input device 915 includes an input control circuit that generates an input signal based on information input by a user, to output to the CPU 901. A user operates this input device 915, and thereby inputs various kinds of data or instructs processing operation with respect to the information processing apparatus 900.

The output device 917 is constituted of a device capable of notifying of acquired information to a user by using senses, such as vision, audition, and a tactual sense. The output device 917 can be, for example, a display device, such as a liquid crystal display (LCD) or an organic electroluminescence (EL) display, a sound output device, such as a speaker and a headphone, a vibrator, or the like. The output device 917 outputs a result acquired by the processing of the information processing apparatus 900 as text or a picture such as an image, a sound, such as a voice or an audio, vibration, or the like.

The storage device 919 is a device for storing data constituted as one example of a storage unit of the information processing apparatus 900. The storage device 919 is constituted of, for example, a magnetic storage device, such as a hard disk drive (HDD), a semiconductor storage device, an optical storage device, a magneto-optical storage device, or the like. The storage device 919 stores, for example, a program executed by the CPU 901 and various kinds of data, and various kinds of data acquired externally.

The drive 921 is a reader/writer for the removable recording medium 927, such as a magnetic disk, an optical disk, a magneto-optical disk, or a semiconductor memory, and is externally provided to the information processing apparatus 900. The drive 921 reads information recorded in the removable recording medium 927, and outputs it to the RAM 905. Moreover, the drive 921 writes a record on the removable recording medium 927 inserted therein.

The connecting port 923 is a port to connect a device to the information processing apparatus 900. The connecting port 923 can be, for example, a universal serial bus (USB) port, an IEEE1394 port, a small computer system interface (SCSI) port, or the like. Furthermore, the connecting port 923 may be an RS-232C port, an optical audio terminal, a high-definition multimedia interface (HDMI (registered trademark)) port, or the like. By connecting the external connecting device 929 to the connecting port 923, various kinds of data can be communicated between the information processing apparatus 900 and the external connecting device 929.

The communication device 925 is, for example, a communication interface constituted of a communication device to connect to a communication network 931, and the like. The communication device 925 can be, for example, a local area network (LAN), a Bluetooth (registered trademark), a Wi-Fi, a communication card for wireless USB (WUSB), or the like. Moreover, the communication device 925 may be a router for optical communication, a router for asymmetric digital subscriber line (ADSL), a modem for various kinds of communications, or the like. The communication device 925 transmits and receives a signal and the like by using a predetermined protocol, such as TCP/IP with respect to the Internet or other communication devices. Moreover, the communication network 931 connected to the communication device 925 is a network connected wiredly or wirelessly, and can include, for example, the Internet, an in-house LAN, an infrared ray communication, a radio wave communication, a satellite communication, and the like.

The imaging device 933 is a device that images actual space by using various kinds of members of an imaging device, such as a complementary metal oxide semiconductor (CMOS) and a charge coupled device (CCD), a lens to control image formation of a subject image onto the imaging device, and the like, and that generates a captured image. The imaging device 933 may be one that images a still image, or one that images a moving image.

The sensor 935 is, for example, various kinds of sensors, such as an acceleration sensor, a gyroscope, a geomagnetic sensor, an illuminance sensor, a temperature sensor, a barometric pressure sensor, a sound sensor (microphone), or the like. The sensor 935 acquires, for example, information relating to a state of the information processing apparatus 900, such as a posture of a casing of the information processing apparatus 900, or information relating to a peripheral environment of the information processing apparatus 900, such as brightness and noises around the information processing apparatus 900. Moreover, the sensor 935 may include a GPS receiver that receives a global positioning system (GPS) signal, and measures a latitude, a longitude, and an altitude of the device.

As above, one example of the hardware configuration of the information processing apparatus 900 has been described. The respective components described above may be configured by using general members, or may be configured by hardware dedicated to a function of the respective components. Such a configuration can be changed appropriately according to a technical level of a time of execution.

As above, exemplary embodiments of the present disclosure has been explained with reference to the accompanying drawings, but a technical scope of the present disclosure is not limited to the example. It is obvious that those having ordinary knowledge in a technical field of the present disclosure can thought of various modification examples or correction examples within a range of a technical thought described in claims, and those are naturally understood to belong to the technical scope of the present disclosure also.

Embodiments of the present disclosure can include, for example, the information processing apparatus as explained above, the system, the information processing method that is performed by the information processing apparatus or system, a program to cause the information processing apparatus to function, and a non-temporary tangible medium in which the program is recorded.

Moreover, the effects described in the present specification are only explanatory or exemplary, but not limited. That is, the technique according to the present disclosure can produce other effects that are obvious to those skilled in the art from the description of the present specification together with or in place of the effects described above.

Configurations as follows also belong to the technical scope of the present disclosure.
(1) An information processing apparatus comprising:
   a recognition processing unit that recognizes a ranging target in space based on a detection result of a space recognition sensor; and
   a ranging-parameter setting unit that sets a scanning region for a ranging sensor that performs three-dimensional ranging by scanning space with a laser, so as to include at least a part of the ranging target.
(2) The information processing apparatus according to (1), wherein
   the ranging-parameter setting unit changes at least either one of a resolution of the scanning region and a scanning speed according to an amount of information of the ranging target.
(3) The information processing apparatus according to (1) or (2), wherein
   the ranging-parameter setting unit sets, according to an amount of movement information of each part of the ranging target, the part of the ranging target to be included in the scanning region.
(4) The information processing apparatus according to any one of (1) to (3), wherein
   the ranging-parameter setting unit identifies an avoidance region to avoid irradiation of a laser by the ranging sensor in the ranging target, based on a recognition result of the recognition processing unit, and
   sets the scanning region so as not to include the avoidance region.
(5) The information processing apparatus according to any one of (1) to (4), wherein
   the ranging-parameter setting unit changes at least either one of a resolution of the scanning region of the ranging target and a scanning speed, according to depth information of the ranging target in the space acquired based on a recognition result by the recognition processing unit.
(6) The information processing apparatus according to any one of (1) to (5), wherein
   when the ranging target is a moving object,
   the ranging-parameter setting unit includes an estimated moving region of the ranging target in the scanning region.
(7) The information processing apparatus according to any one of (1) to (6), wherein
   the ranging-parameter setting unit changes scan setting information that includes a parameter relating to scanning of the scanning region, according to a context of use of a ranging result obtained by the ranging sensor.
(8) The information processing apparatus according to (7), wherein
   when a ranging result of the ranging sensor is provided to a vehicle on which the ranging sensor is mounted,
   the ranging-parameter setting unit
   sets scan setting information so as to give priority to any one of a scanning speed and a distance, while the vehicle is moving, and
   sets the scan setting information so as to give priority to any one of an angle of view and a resolution, while the vehicle is stopped.
(9) The information processing apparatus according to any one of (1) to (8), wherein
   the ranging-parameter setting unit sets a spatial region other than the scanning region as a second scanning region that is scanned by the ranging sensor at lower frequency than scanning frequency for the scanning region.
(10) The information processing apparatus according to any one of (1) to (8), wherein
   the ranging sensor is a LiDAR.
(11) An information processing method comprising:
   recognizing a ranging target in space based on a detection result of a space recognition sensor; and
   setting a scanning region for a ranging sensor that performs three-dimensional ranging by scanning space with a laser, so as to include at least a part of the ranging target.
(12) A ranging system comprising:
   a ranging sensor that three-dimensionally ranges space by using a laser; and
   an information processing apparatus that recognizes a ranging target in the space based on a detection result by a space recognition sensor, and that sets a region including at least the ranging target as a scanning region to be scanned by the ranging sensor.

### Reference Signs List

- 1: RANGING SYSTEM
- 60: VEHICLE
- 70: OBJECT
- 100: SENSOR
- 102: SPACE RECOGNITION SENSOR
- 104: RANGING SENSOR
- 110: GPS RECEIVER
- 120: IMU
- 130: CAMERA
- 141: CONTROL LOGIC IC
- 143: LIGHT EMITTING UNIT
- 1431: AMPLIFIER (AMP)
- 1433: LASER DIODE (LD)

- 1435: SCANNING UNIT
- 1437: LENS
- 1439: FILTER
- 145: LIGHT RECEIVING UNIT
- 1461: FILTER
- 1453: LENS
- 1455: PHOTODIODE (PD)
- 1457: AMPLIFIER (AMP)
- 200: INFORMATION PROCESSING APPARATUS
- 210: SIGNAL PROCESSING UNIT
- 215: IMAGE PROCESSING UNIT
- 220: RECOGNITION PROCESSING UNIT
- 230: RANGING-PARAMETER SETTING UNIT
- 300: ENVIRONMENT INFORMATION DB
- 400: SETTING INFORMATION DB

## Claims

1. An information processing apparatus comprising:
a recognition processing unit that recognizes a ranging target in space based on a detection result of a space recognition sensor; and
a ranging-parameter setting unit that sets a scanning region for a ranging sensor that performs three-dimensional ranging by scanning space with a laser, so as to include at least a part of the ranging target.

2. The information processing apparatus according to claim 1, wherein
the ranging-parameter setting unit changes at least either one of a resolution of the scanning region and a scanning speed according to an amount of information of the ranging target.

3. The information processing apparatus according to claim 1, wherein
the ranging-parameter setting unit sets, according to an amount of movement information of each part of the ranging target, the part of the ranging target to be included in the scanning region.

4. The information processing apparatus according to claim 1, wherein
the ranging-parameter setting unit identifies an avoidance region to avoid irradiation of a laser by the ranging sensor in the ranging target, based on a recognition result of the recognition processing unit, and
sets the scanning region so as not to include the avoidance region.

5. The information processing apparatus according to claim 1, wherein
the ranging-parameter setting unit changes at least either one of a resolution of the scanning region of the ranging target and a scanning speed, according to depth information of the ranging target in the space acquired based on a recognition result by the recognition processing unit.

6. The information processing apparatus according to claim 1, wherein
when the ranging target is a moving object,
the ranging-parameter setting unit includes an estimated moving region of the ranging target in the scanning region.

7. The information processing apparatus according to claim 1, wherein
the ranging-parameter setting unit changes scan setting information that includes a parameter relating to scanning of the scanning region, according to a context of use of a ranging result obtained by the ranging sensor.

8. The information processing apparatus according to claim 7, wherein
when a ranging result of the ranging sensor is provided to a vehicle on which the ranging sensor is mounted,
the ranging-parameter setting unit
sets scan setting information so as to give priority to any one of a scanning speed and a distance, while the vehicle is moving, and
sets the scan setting information so as to give priority to any one of an angle of view and a resolution, while the vehicle is stopped.

9. The information processing apparatus according to claim 1, wherein
the ranging-parameter setting unit sets a spatial region other than the scanning region as a second scanning region that is scanned by the ranging sensor at lower frequency than scanning frequency for the scanning region.

10. The information processing apparatus according to claim 1, wherein
the ranging sensor is a LiDAR.

11. An information processing method comprising:
recognizing a ranging target in space based on a detection result of a space recognition sensor; and
setting a scanning region for a ranging sensor that performs three-dimensional ranging by scanning space with a laser, so as to include at least a part of the ranging target.

12. A ranging system comprising:
a ranging sensor that three-dimensionally ranges space by using a laser; and
an information processing apparatus that recognizes a ranging target in the space based on a detection result by a space recognition sensor, and that sets a region including at least the ranging target as a scanning region to be scanned by the ranging sensor.
